# EUROPÄISCHE PATENTSCHRIFT

(11) **EP 0 433 634 B1**
(45) Veröffentlichungstag und Bekanntmachung des Hinweises auf die Patenterteilung: **03.08.1994**
(21) Anmeldenummer: 90121247.2
(22) Anmeldetag: 07.11.1990
(51) Int. Cl.: B29C 69/00, B65D 75/32

(54) **Verfahren zur Herstellung einer Fliessmittelpackung und Verwendung einer Kunststoffplatte für das Herstellungsverfahren**
Method of producing a flowable material package and use of a plastic plate for the production process
Procédé de fabrication d'un emballage pour matériaux fluides et utilisation d'une plaque de plastique pour le processus de fabrication

(30) Priorität: 20.12.1989 DE 3941992
(43) Veröffentlichungstag der Anmeldung: 26.06.1991
(73) Patentinhaber: Tetra Laval Holdings & Finance SA, 1009 Pully (CH)
(72) Erfinder: Reil, Wilhelm, W-6140 Bensheim (DE); Deutschbein, Ulrich, W-6109 Mühltal (DE); Knobloch, Gerd, W-6103 Griesheim (DE); Liebram, Udo, W-6102 Pfungstadt (DE)
(74) Vertreter: Weber, Dieter, Dr.

(56) Entgegenhaltungen:
- DE-A- 2 503 472
- US-A- 3 912 080

## Beschreibung

Die Erfindung betrifft ein Verfahren zur Herstellung einer mit einem Fließmittel gefüllten Packung mit Tubus, Boden und Oberwand aus verformbarem Kunststoff, bei welchem die durch verformung und Wärmeeinwirkung gebildete Packung gefüllt, verschlossen und abgefördert wird (betriebsinterner Stand der Technik).

Es sind bereits Herstellungsverfahren der vorstehend genannten Art zur Schaffung von Packungen bekannt, in denen ölige oder pasteuse Massen oder Fette verpackt werden. Aus tiefziehfähigen Kunststoffen, die selbstverständlich mit den zu verfüllenden Fließmitteln verträglich sein müssen, wird zur Bildung des Packungsvolumens ein Tubus mit Boden und Oberwand geformt, oder es werden zwei Packungshälften geformt und fließmitteldicht miteinander verschweißt. Das Verformen erfolgt bei den bekannten Verfahren durch Tiefziehen, wobei je nach der hergestellten Packung mehr oder weniger aufwendige Werkzeuge verwendet werden und vor allen Dingen ein nicht unerheblicher Anteil Abfall entsteht. Bei den bekannten Tiefziehverfahren wird nämlich ein die jeweils tiefzuziehenden Behälter tragendes Gerüst, welches man auch als Gitter bezeichnen kann, durch Ausstanzen gebildet. Dieses Gerüst muß nach dem Tiefziehschritt des Herstellungsverfahrens aus der Maschine herausgezogen werden, wird im allgemeinen aufgerollt und zur Wiederverwendung einer anderen Herstellungsstation zugeführt. Diese nicht unerhebliche Materialmenge muß wieder eingeschmolzen werden, damit sie weiterverarbeitet werden kann.

Abgesehen von den nachteiligen Energieaufbringung und zusätzlichen Schritten zur Wiedergewinnung des Abfallmateriales ist ein solches Herausnehmen und Abfördern dieses Materials, insbesondere wenn es in Form eines voluminösen Gerüstes oder Gitters auftritt, an den Füllmaschinen nachteilig, schon wenn man an die zusätzlichen Maschinenteile und den zum Abfördern des Abfalles erforderlichen Platzbedarf denkt.

Aufgabe der Erfindung ist die Schaffung eines umweltfreundlichen Herstellungsverfahrens mit den Merkmalen der vorstehend genannten Art, bei dem teilweise lange Taktzeiten erreichbar und einfachere Herstellungsschritte ohne Abfall oder Materialrückführung ermöglicht werden.

Diese Aufgabe wird erfindungsgemäß dadurch gelöst, daß zwei Zuschnitte in Gestalt jeweils einer im wesentlichen ebenen Platte im Abstand voneinander erwärmt, dann wenigstens längs eines rahmenförmigen Streifens gehalten werden, der Mittelbereich innerhalb des rahmenförmigen Streifens tiefgezogen wird und danach zur Bildung des Packungsvolumens die zwei Zuschnitte zusammengebracht und verschweißt werden, wobei eine Öffnung in einer Oberwand vorgesehen wird, die somit gebildete und mit Ausnahme des Öffnungsbereiches fließmitteldichte Packung gekühlt, weitergefördert, gefüllt und mit einem die Öffnung abdeckenden Öffnungsstück verschlossen wird.

Im Prinzip geht die Erfindung also von Zuschnitten aus, die entweder in entsprechend bewegten Magazinen angeboten und vereinzelt paarweise im Abstand im Verfahren angeboten werden oder die von einer Bahn abgenommen und vor dem paarweisen Anbieten vereinzelt werden. Dabei ist es wichtig zu beachten, daß die Zuschnitte bei dem erfindungsgemäßen Verfahren vollständig verbraucht werden, ohne daß der gitterförmige Abfall entsteht. Dies gelingt durch das Zusammenbringen des Paares der zueinandergehörenden Zuschnitte längs eines rahmenförmigen Streifens, der vorzugsweise im Umfangsbereich des jeweiligen Zuschnittes liegt. Der Außenrand des jeweiligen Zuschnittes wird also zum Halten für den Tiefziehvorgang und danach verschweißen, der dazwischenliegende Mittelbereich zum Tiefziehen verwendet. Hierbei ist es unerheblich, ob aus einem Paar von Zuschnitten eine einzige Packung oder eine Gruppe von Packungen gleichzeitig hergestellt wird. Im Falle der Herstellung einer Einzelpackung zieht sich der rahmenförmige Streifen längs des Umfanges des Zuschnittes; und im Falle der Mehrfachherstellung von Packungen in Gruppen zieht sich zusätzlich zu dem Streifen am Umfang des Zuschnittes vorzugsweise eine Gruppe von Streifen auch quer durch den jeweiligen Zuschnitt. Gleichwohl wird das jeweilige Paar von Zuschnitten wenigstens längs eines rahmenförmigen Streifens in erwärmtem Zustand zusammengebracht und im Bereich des Streifens verschweißt.

Wenn man eine allgemein verwendbare Flüssigkeitspackung herstellen will, ist die Anordnung einer Öffnung in der Oberwand selbstverständlich. Diese kann im Verlaufe der hier beschriebenen erfindungsgemäßen Schritte in der Oberwand vorgesehen werden, vorzugsweise im Bereich des rahmenförmigen Streifens, wie nachfolgend noch genauer ausgeführt wird.

Die dann gebildete Packung ist fließmitteldicht verschweißt und wäre vollständig fließmitteldicht, wenn nicht die Öffnung vorgesehen wäre. Zur Vervollständigung des Herstellungsverfahrens wird schließlich die Öffnung nach dem Füllen mit einem eingeschweißten Öffnungsstück verschlossen.

Die vorstehenden Maßnahmen gemäß der Erfindung erlauben die Schaffung eines besonders umweltfreundlichen Verfahrens, weil dieses Verfahren keinen Abfall erzeugt, insbesondere nicht ein gitterförmiges Gerüst übrigbleibt, nachdem die geeigneten Zuschnitte für die Packungen ausgestanzt sind. Vielmehr entfällt der Ausstanzvorgang, und der Umfang des jeweiligen Zuschnittes wird als Siegelstreifen verwendet. Dadurch entfällt also das Entstehen von Abfall und die Rückführung des entsprechenden Materials mit allen damit zusammenhängenden Vorteilen sowohl beim Herstellen der Packung als auch beim Füllen derselben. Die Verwendung im wesentlichen ebener Platten als Zuschnitte und auch die anderen Verfahrensschritte erlauben eine besonders einfache Herstellung, die - wie sich nachfolgend noch zeigt - teilweise zu langen Taktzeiten führt. Hiermit sind die Vorteile einer in vielfacher Hinsicht günstigen Verarbeitung verbunden, denn wenn genug Zeit für einzelne Verfahrensschritte zur Verfügung steht, kann man diese Verfahrensschritte sehr einfach halten. Innerhalb einer langen Taktzeit kann beispielsweise durch Schwerkraft gefüllt werden, ohne daß man die Fließmittelgeschwindigkeit durch Druckerhöhung der Medien steigern müßte.

Vorteilhaft ist es gemäß der Erfindung ferner, wenn die zwei für die Bildung wenigstens einer Packung vorgesehenen Zuschnitte durch Wärmekontakt mit Heizbacken in mindestens zwei Stufen erwärmt werden, jeder Zuschnitt längs seiner Außenkante unter Bildung des rahmenförmigen Streifens nur im Bereich dieses Streifens durch Vakuum am Rahmen eines Formbackens gehalten und weiter erwärmt wird und dann nach dem Tiefziehen des Mittelbereiches der Packung die Streifen beider Zuschnitte aufeinanderzubewegt und durch Kontaktschweißen miteinander verbunden werden. Nach konkreter Lehre der Erfindung erfolgt die Erwärmung der Zuschnitte sehr zweckmäßig durch körperlichen Kontakt mit geheizten Backen, wobei die Erwärmung auf die notwendige Temperatur am besten in zwei Stufen unterteilt wird, denn dann kann das Herstellungsverfahren besser einem kontinuierlichen Verfahren angepaßt werden. Wenn die plattenartigen Zuschnitte nach Durchlaufen der zwei Stufen zu einer vorbestimmten Weichheit vorerwärmt sind, werden sie nur im Bereich des rahmenförmigen Streifens mit einer entsprechend ausgestalteten Oberfläche eines Formbackens in Berührung gebracht, durch Vakuum an diese Oberflächen angesaugt und dadurch festgehalten, und bei entsprechend gestalteten Formbacken - insbesondere im Mittelbereich innerhalb des rahmenförmigen Streifens - erfolgt nach dem Aufdrücken der rahmenförmigen Streifen an ein passendes Werkzeug ein Tiefziehen im Mittelbereich, denn die beiden plattenförmigen Zuschnitte werden nur längs des Rahmens gehalten und können daher nur in den Bereichen zwischen den rahmenförmigen Streifen tiefgezogen werden. Der eine tiefgezogene Packungsteil, welcher aus dem einen Zuschnitt des Paares hergestellt wurde, wird als nächstes mit dem anderen auch schon tiefgezogenen Packungsteil längs des rahmenförmigen Streifens in Berührung gebracht, wobei die erwähnten streifenförmigen Oberflächen der Werkzeugbacken auf jeder Seite einer gedachten Mittelebene von der Rückseite Druck auf den Streifen des Packungsteils ausüben, wodurch die warmen Streifen der beiden Packungsteile durch Siegeln untrennbar miteinander verbunden werden.

Zweckmäßig ist es gemäß der Erfindung weiterhin, wenn die Öffnung in der Oberwand der Packung während des Tiefziehvorganges dadurch gebildet wird, daß anstelle des Streifens eine die Hälfte der Öffnung bildende Ausnehmung in dem jeweiligen Oberwandteil durch Tiefziehen geformt wird, wobei die zwei Ausnehmungen beim Zusammenschweißen der Streifen die Öffnung bilden. Es wurde vorstehend bereits erwähnt, daß in der Oberwand der Packung eine Öffnung gebildet werden muß, um die Packung nach dem Herstellen ihrer wesentlichen Teile füllen zu können. Dabei ist es zweckmäßig, wenn nach der erfindungsgemäßen Lehre diese Öffnung während des Tiefziehvorganges hergestellt wird, wobei vorzugsweise die Öffnung im Bereich des rahmenförmigen Streifens liegt derart, daß in dem jeweiligen Packungsteil (denn zwei Packungsteile werden zusammengeschweißt und bilden dann die gesamte Packung) durch Tiefziehen eine Ausnehmung so geformt wird, daß beim Zusammenlegen der Packungsteile nach dem Tiefzie-hen beide Ausnehmungen zusammen die genannte Öffnung bilden. Hierdurch wird verständlich, daß nach dem Aneinanderdrücken der vorerwähnten rahmenförmigen Streifen der beiden Packungsteile unter Bildung des Packungsvolumens dazwischen die Gesamtpackung zwar fließmitteldicht verschweißbar ist und durch die Kombination von Wärme und Druck auch verschweißt wird, allerdings mit Ausnahme des Öffnungsbereiches, denn durch die zwei Ausnehmungen wird eine Öffnung gebildet, die bis nach dem Füllvorgang geöffnet bleibt.

Erfindungsgemäß ist es ferner besonders vorteilhaft, wenn die Packungswandungen zu einer solchen Gestaltung ausgeformt werden, daß der rahmenförmige Streifen im wesentlichen in einer Ebene liegt und die Packung mit Ausnahme der Öffnung vollständig umzieht und wenigstens an Boden und Oberwand nicht über die Außenkontur der Packung hinausragt. Die Tiefziehformen können entsprechend ausgestaltet werden, und dann liegt trotz des die Packung stützenden Streifens, der wenigstens im Bereich von Boden und Oberwand sozusagen senkrecht zu deren Ebenen angeordnet ist, der Streifen nicht außerhalb der Außen- bzw. Umfangskontur der Packung. Mit anderen Worten ist eine derart hergestellte Packung standfest und auch übereinander stapelbar. Gleichwohl ist diese Packung durch den rahmenförmigen Streifen vorteilhaft versteift, denn nur mit der Ausnahme der Öffnung für die Ausgießeinrichtung umzieht der Streifen die Packung vollständig, ohne über die Außenkontur hinauszuragen.

Gemäß einer bevorzugten Maßnahme gemäß der Erfindung wird beim Tiefziehen in wenigstens einer Packungswandung eine den rahmenförmigen Streifen aufnehmende, rinnenartige Vertiefung eingeformt. Durchzieht der in Rede stehende Streifen beispielsweise die ebene Oberwand längs, quer oder diagonal, dann sorgt die rinnenartige Vertiefung, die auch als Nut aufgefaßt werden kann, für ein Aufnehmen und Tieferlegen dieses Streifens derart, daß der Streifen letztlich nicht über die Außenkontur der Packung und damit über die äußere ebene Oberfläche der Oberwand hinausragt. Die Anordnung dieser Vertiefung gemäß der Erfindung ist selbstverständlich nicht auf eine ebene Oberwand beschränkt, denn eine Vertiefung kann auch eine kegelförmige oder in anderer Weise gekrümmte Oberfläche längs einer bestimmten Linie durchziehen, wobei diese rinnenartige Vertiefung oder Nut dem Streifen bei seinem Verlauf um die Packungsoberfläche herum folgt.

Weiterhin ist die Erfindung vorteilhaft dadurch ausgestaltet, daß ein separat vorgefertigtes, öffnungsfähiges Öffnungsstück aus verformbarem Kunststoff an die gefüllte Packung herangeführt, bei gleichzeitigem Erwärmen des Randes der Öffnung erwärmt und danach in die Öffnung eingesetzt und an deren Rand fließmitteldicht verschweißt wird. Die vorstehenden Ausführungen beschreiben anschaulich die Bildung der Packung mit der noch nicht verschlossenen Öffnung, und es ist auch bereits beschrieben worden, daß danach das Füllgut in die Packung eingefüllt wird. Zwar ist es selbstverständlich, daß die Packung dann verschlossen werden muß, vorstehend werden aber die vorteilhaften Maßnahmen bei einer bevorzugten Ausführungsform erwähnt, daß dieses Verschließen durch Heranführen, Aufsetzen und Verschweißen eines sogenannten Öffnungsstückes erfolgt. Dieses kann man aus geeignet verformbarem Kunststoff separat vorfertigen und so ausgestalten, daß es auch nach dem Einschweißen in die erwähnte Öffnung in der Packungsoberwand geöffnet werden kann. Nur dann handelt es sich um eine zweckmäßige Ausgießeinrichtung, denn eine solche muß einwandfrei fließmitteldicht und ohne allzu großen Kraftaufwand geöffnet werden können. Möglichst soll sie sogar ein Wiederverschließen erlauben, welches erfindungsgemäß einwandfrei gewährleistet ist. Durch die separate Herstellung des Öffnungsstückes steht je nach der Ausgestaltung des Magazins zu beliebiger Zeit die gewünschte Anzahl Öffnungsstücke zur Verfügung und braucht durch geeignete Maßnahmen nur an die Packung und zwar an deren Öffnung herangeführt zu werden. Bei entsprechend vorgeheiztem Rand und entsprechender Gegenfläche an dem Öffnungsstück genügt dann ein Eindrücken des Öffnungsstückes auf den Rand der Packungsöffnung, so daß - vorzugsweise durch zusätzliches Aufbringen einer kleinen Druckbewegung - ein fließmitteldichtes Verschweißen garantiert ist.

Zur Leistungssteigerung des Herstellungsverfahrens oder der zur Ausführung dieses Verfahrens vorgesehenen Maschine ist es vorteilhaft, wenn erfindungsgemäß zur gleichzeitigen Ausformung mehrerer Packungen entsprechend viele rahmenförmige Streifen im Randbereich und in Zwischenstreifenbereichen des jeweiligen Zuschnittes beim Tiefziehen gebildet werden, daß die zwischen den Streifen tiefgezogenen Mittelbereiche jeweils eine Reihe von hintereinander angeordneten Packungshälften bilden und alle Streifenbereiche zweier Zuschnitte eines Paares gleichzeitig miteinander verschweißt werden und nach dem Füllen der Packungsreihe und dem Verschließen mittels Aufsiegeln einer entsprechenden Reihe von Öffnungsstücken die Packungsreihe vorzugsweise durch Trennschweißen in Einzelpackungen aufgeteilt wird.

In Verbindung mit dem rahmenförmigen Streifen und der entsprechenden Oberfläche des Formbackens wurde bereits gesagt, daß am Rand des Zuschnittes zwar ein solcher Streifen gebildet werden soll, bei Herstellung einer Gruppe von Packungen gleichzeitig aus jeweils einem Paar von Zuschnitten noch Zwischenstreifen angeordnet werden. Der plattenförmige Zuschnitt kann beispielsweise die Gestalt eines Rechteckes haben, wobei die Höhe dieses Zuschnittes der Höhe der fertigen Packung entspricht und die Länge des Zuschnittes der maximalen Breite einer Reihe oder Gruppe von hintereinander angeordneten Packungen entspricht, wenn beispielsweise der aus den zwei rahmenförmigen Streifen zusammengesetzte doppelwandige Mittelstreifen der fertigen Packung diese im Bereich des Bodens und der Oberwand diagonal durchläuft. Der gesamte Zuschnitt bildet dann den rechteckigen rahmenförmigen Streifen in Gestalt eines Rechteckes der besagten Höhe und der beschriebenen Länge, wobei jeweils sich über die Höhe erstreckende weitere geradlinige Streifen parallel und im Abstand zueinander so verlaufen, daß der gesamte Zuschnitt in die entsprechende Anzahl von Teilfeldern unterteilt wird, wie Anzahl von Packungen aus diesem einen Zuschnitt hergestellt werden sollen. Bei entsprechend breiter Ausgestaltung der Zwischenstreifen kann man diese beim Vereinzeln - vorzugsweise durch Trennschweißen - so aufteilen, daß jede Packung auch über ihre gesamte Höhe den gewünschten doppelwandigen Mittelstreifen erhält.

Es versteht sich, daß das Herstellungsverfahren durch die gleichzeitige Ausformung mehrerer Packungen erheblich beschleunigt werden kann - vorzugsweise zugunsten bestimmter Bearbeitungsschritte, welche dann eine lange Taktzeit erhalten können.

Erfindungsgemäß ist es zweckmäßig, wenn die Erwärmung der Zuschnitte auf 160°C bis etwa 200°C, vorzugsweise 170°C bis 180°C erfolgt und in jeder Stufe etwa 3 Sekunden bis fünf Sekunden, vorzugsweise zwei bis drei Sekunden, dauert. Auf diese Weise sind die Zuschnitte auf den richtigen Weichheitsgrad gebracht, insbesondere bei zwei- oder dreistufiger Erwärmung der im wesentlichen ebenen Zuschnitte, so daß dann in recht kurzer Zeit die rahmenartigen Oberflächen des Formbackens die jeweilige Packung am rahmenförmigen Streifen erfassen, ansaugen und unter weiterer Erwärmung gegen den entsprechenden rahmenförmigen Streifen des Gegenstückes eines Paares derart drücken, daß aus den beiden hälftigen Teilen eine Gesamtpackung wird. Zwar ist dieses Verfahren nicht darauf beschränkt, daß auf jeder Seite der erwähnten und gedachten Mittelebene genau eine Hälfte des Endproduktes geformt wird, ersichtlich ist dies aber besonders praktisch und daher auch erfindungsgemäß bevorzugt.

Bei der Verarbeitung der plattenförmigen Zuschnitte mit dem erfindungsgemäßen Verfahren ist es vorteilhaft, wenn die Paare von plattenförmigen Zuschnitten durch Schwerkraft oder mittels Druckluft/Saugluft-Antriebe durch die einzelnen Verfahrensstufen gefördert werden. Wenn die Zuschnitte eines jeweiligen Paares durch Wärmekontakt in einer ersten und danach mindestens in einer zweiten Stufe vorgewärmt werden, gelingt der Transport von einer Erwärmungsstufe zur nächsten am besten dadurch, daß man die Zuschnitte in geeigneter Anordnung hält und auf in Lotrichtung darunter befindliche Anschläge fallen läßt (Schwerkraft) oder durch Saugluft an Heizbacken heranzieht und so hält, daß die Backen mit oder relativ zum Zuschnitt Bewegungen durchführen können, wobei Umschaltmöglichkeiten auf Druckluft zweckmäßig sind, insbesondere zur Steigerung der Ablösegeschwindigkeiten.

Als sehr vorteilhaft hat sich erfindungsgemäß die Verwendung einer 0,2 bis 1,7 mm, vorzugsweise 0,4 bis 1,0 mm, dicken Kunststoffplatte als Zuschnitt aus einem vorzugsweise gefüllten, tiefziehfähigen Thermoplast für die Herstellung einer Fließmittelpackung erwiesen. Kaltverformbare und auch warmverformbare Kunststoffmaterialien sind bekannt, und sie eignen sich alle zur Herstellung einer Packung mit dem erfindungsgemäßen Verfahren. Vorzugsweise ist das Kunststoffmaterial der Packung tiefziehfähig, insbesondere ein thermoplastischer Kunststoff, wie z.B. Polypropen. Als thermoplastischer Kunststoff kann beispielsweise auch PVC dienen, und Polypropen ist in der Technik weitgehend auch als Polypropylen bekannt. Die mit dem erfindungsgemäßen Verfahren hergestellte Packung besteht bei Verwendung eines solchen Materials für den Zuschnitt aus einwandfrei wiederaufarbeitbaren Teilen und Materialien (im Gegensatz zu Verbundmaterialien). Bei einer bevorzugten Ausführungsform kann man das Kunststoffmaterial, z.B. das Polypropen, auch füllen, wobei als Füllstoffe hier an Kreide, Glimmer, Talkum, Gips oder dergleichen gedacht ist. In der Praxis haben sich Füllgrade von etwa 60 % als günstig erwiesen. Es hat sich gezeigt, daß derartige gefüllte Kunststoffmaterialien und insbesondere die vorstehend erwähnten Kunststoffplatten als Zuschnitte tiefziehfähig und auch siegelfähig sind.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:
- Figur 1: perspektivisch die einzelnen Verfahrensschritte zur Herstellung einer Flüssigkeitspackung,
- Figur 2: schematisch zur Veranschaulichung der Grundschritte des Herstellungsverfahrens ein gedachtes Zwischenprodukt,
- Figur 3: schematisch die Oberwand wie sie bei einer speziellen Ausführungsform vor dem Füllen gebildet ist, und
- Figur 4: perspektivisch die vergrößerte Oberseite der in Figur 1 gezeigten Packung als Produkt des Herstellungsverfahrens.

Die allgemein mit 1 bezeichnete Packung weist einen in den Zeichnungen nicht näher bezeichneten Boden und eine im wesentlichen ebene Oberwand 2 auf, wobei der Hauptkörper bzw. das Packungsvolumen durch einen zwischen Boden und Oberwand 2 angeordneten Tubus 3 gebildet ist. Alle Teile, d.h. der Boden, die Oberwand 2 und der Tubus 3, also die ganze Packung 1, besteht aus zu 60 % mit Kreide gefülltem Polypropen, welches gut verformbar und tiefziehfähig ist.

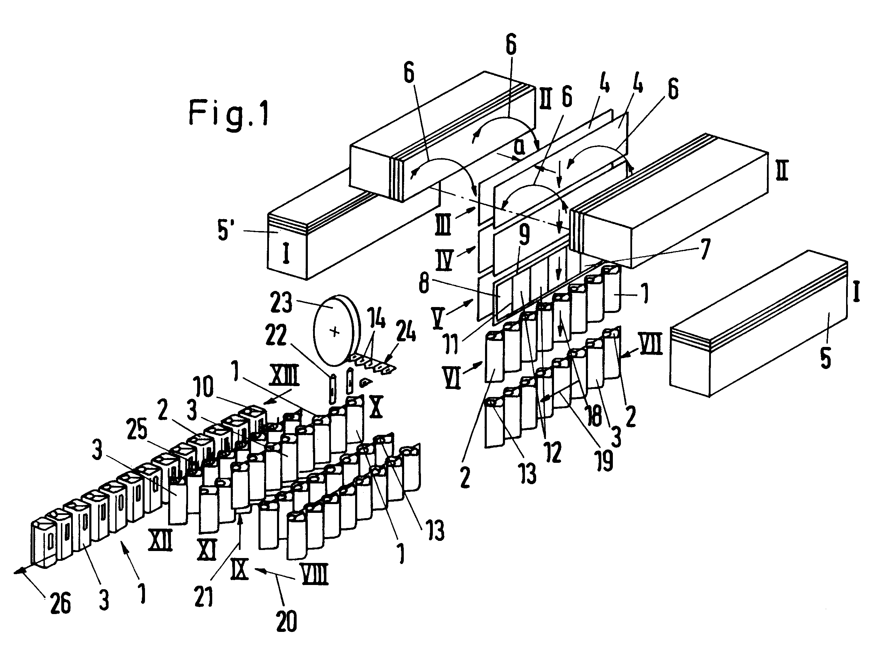

Dieses Kunststoffmaterial wird paarweise in Gestalt zweier im wesentlichen ebener Zuschnitte 4 in Plattenform angeliefert. Auf zwei Seiten einer nicht näher bezeichneten und einfach zu denkenden, vertikalen Mittelebene liegt in Figur 1 rechts ein erster Stapel 5 und links außen ein entsprechender zweiter Stapel 5' dieser Zuschnitte 4 in jeweils einer Position I. Es kann vorteilhaft sein, die Zuschnitte 4 etwa horizontal liegend aufeinanderzustapeln, wie dies zur Bildung des Stapels 5, 5' in der Position I dargestellt ist. Aber auch eine andere Anordnung der Zuschnitte 4 in Gestalt der ebenen Platten ist denkbar, wie nämlich in der darüber gezeigten Position II dargestellt ist, in welcher der Stapel 5, 5' um 90° derart gedreht wurde, daß die jeweilige Plattenebene der Zuschnitte 4 etwa vertikal liegen. In dieser Position II werden die Zuschnitte 4 also dem Herstellungsverfahren angeboten. Dabei können die Zuschnitte 4 bereits bedruckt sein.

Das Herstellungsverfahren beginnt nun so, daß aus dem Stapel 5, 5' der jeweils vorderste Zuschnitt 4 in die Position III gebracht wird, in welcher dieses Paar von Zuschnitten 4 selbstverständlich aus zwei einzelnen, ebenen rechteckförmigen Zuschnitten 4 besteht, die im Abstand a voneinander gehalten werden.

Soweit die Zuschnitte 4 jedes Paares in den einzelnen Stufen in gleicher Weise behandelt werden, beschränkt sich die folgende Beschreibung darauf, Behandlung und Bewegung der vorderen rechten Platte darzustellen und zu erläutern.

Die erste Bewegung des Zuschnittes 4 (beider Zuschnitte 4 jedes Paares) erfolgte also gemäß gebogenem Pfeil 6, so daß der vertikal stehende Zuschnitt 4 aus der Position II in die Stellung III bewegt wurde. In dieser Stellung erfolgt durch Wärmekontakt mit nicht gezeigten Heizbacken etwa drei Sekunden lang eine Erwärmung mit einer Heizbackentemperatur von etwa 170°C.

Nach dieser Zeit und Erwärmung wird der Zuschnitt 4 vertikal nach unten in die Position IV bewegt, die man als zweite Heizstufe bezeichnen kann. Hier wiederholt sich die Erwärmung des jeweiligen Zuschnittes 4 drei Sekunden lang in Wärmekontakt mit einer auf etwa 170°C befindlichen Heizbacke und vorzugsweise zwischen gegeneinandergedrückten Heizbacken auf beiden Seiten.

Es folgt eine dritte Erwärmungsstufe dadurch, daß der Zuschnitt 4 wiederum vertikal nach unten in die Position V bewegt und dort angehalten und weitere drei Sekunden erwärmt wird. Entweder beginnt nach der Position V die Ausformung der Reihe von Packungshälften, oder die Ausformung beginnt, nachdem der Zuschnitt 4 die Stufe IV verlassen hat und in die Stufe V gelangt ist.

In der Position V ist daher an dem vorderen Zuschnitt der rahmenförmige Streifen angedeutet, wie er durch entsprechend geformte Oberflächen des nicht gezeigten Formbackens erzeugt wird. Von unten nach oben im Uhrzeigersinn verlaufend erkennt der Betrachter des vorderen rechten Zuschnittes 4 in der Position V den horizontalen geraden Teil 7, links dann den vertikal über die gesamte Höhe des Zuschnittes 4 nach oben verlaufenden Teil 8 und schließlich den wieder horizontal nach rechts verlaufenden Teil 9 des rahmenförmigen Streifens, der allgemein mit 10 bezeichnet ist. In der Position V ist der rechte vertikale Teil des rahmenförmigen Streifens 10 verdeckt und daher nicht erkennbar.

Bei der Ausführungsform der Figur 1 wird nicht eine einzelne Packung aus einem Paar von Zuschnitten 4 hergestellt, sondern durch die längliche rechteckige Gestalt des jeweiligen Zuschnittes 4 wird eine ganze Reihe von hier acht Packungen aus einem einzigen Paar von Zuschnitten 4 hergestellt. Infolgedessen liegen zwischen dem vorderen sichtbaren vertikalen Teil 8 des Streifens 10 und dem hinteren unsichtbaren vertikalen Teil 7 breitere und geradlinige Zwischenteile 11, so daß sich eine ganze Reihe von acht rahmenförmigen Streifen 10 ergibt, jeweils einer für eine Packung, wie in der darunter angeordneten Position VI wiedergegeben ist.

Innerhalb des jeweiligen rahmenförmigen Streifens 10 und in dem gesamten Zuschnitt 4 befindet sich jeweils ein Mittelbereich 12, der bei derjenigen Ausführungsform, bei welcher die ganzflächige Vorwärmung in der Position IV beendet ist, in der Position V zur Bildung des eigentlichen Tubus 3 der Packung 1 tiefgezogen wird.

Betrachtet man also diese Ausführungsform, in welcher in der Position V der gesamte Zuschnitt 4 an einen entsprechend geformten und nicht dargestellten Formbacken durch Vakuum längs des jeweiligen Streifens 10 angesaugt wird, dann versteht sich, daß trotzdem ein weiteres Erwärmen wenigstens des Streifens 10 erfolgt und nach Einschalten des Vakuums im Formbacken der Mittelbereich 12 tiefgezogen wird.

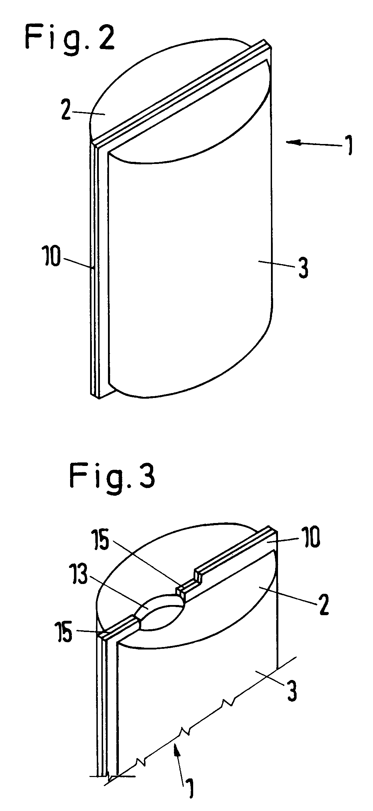

Nicht dargestellt ist die Bildung der Öffnung 13 der Packung 1 in ihrer Oberwand 2. Ließe man die Bildung dieser Öffnung 13 unbeachtet, dann würde nach dem Zusammenbringen der tiefgezogenen Zuschnitte 4 eines Paares längs ihres rahmenförmigen Streifens 10 und Verschweißen derselben miteinander eine Packung 1 gemäß Figur 2 geformt werden (unter der Voraussetzung einer z.B. kreisrunden Oberwand 2). Diese Ausführungsform der Figur 2 ist lediglich für das Verständnis der Verfahrensschritte und zur einfacheren Darstellung gewählt.

Tatsächlich muß die Öffnung gemäß Lehre der Erfindung während des Tiefziehens gebildet werden, so daß im Falle einer kreisrunden Oberwand 2 eine Packungsoberseite gemäß der abgebrochenen Darstellung der Figur 3 entsteht.

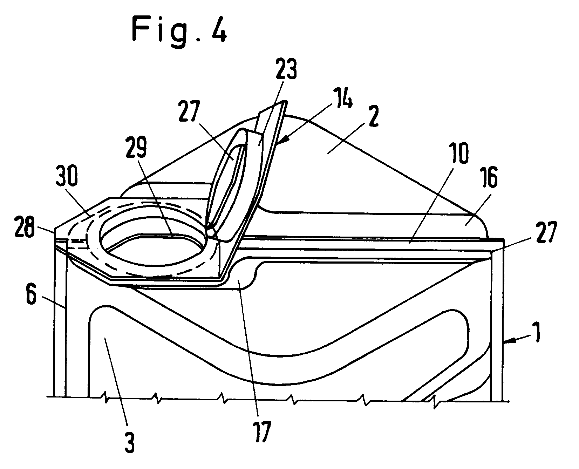

Aus Gründen der besseren Unterbringung des Öffnungsstückes 14 ist der doppelwandige Streifen 10 der Packung gemäß Figur 3 neben der Öffnung 13 in den Bereichen 15 sogar gestaucht, d.h. von der Oberfläche der Oberwand 2 nach oben um eine geringere Höhe herausstehend als der eigentliche Streifen 10. Durch die Anordnung entsprechender Vertiefungen 16, wie sie beispielsweise bei der Ausführungsform der Figur 4 im Oberboden 2 gezeigt sind (mit einer Erweiterung 17 im vorderen Bereich) können alle Teile der Packung, einschließlich des rahmenförmigen Streifens 10 und des Öffnungsstückes 14, innerhalb der Außenkontur der Packung untergebracht werden.

Hinsichtlich des Verfahrens kann also jetzt unter Berücksichtigung der Bildung der Öffnung 13 eine Reihe von Packungen 1 gemäß Position VI entformt werden. In der Stellung VI befinden sich also acht miteinander verbundene und direkt hintereinanderliegende Packungen 1, nachdem sie immer vertikal in Richtung des Pfeiles 18 aus der Stellung V zwischen den nicht gezeigten Formbacken nach unten in die Stellung VI bewegt worden sind. Jeweils aufeinanderfolgende Packungen 1 sind über die breiten, geraden Zwischenstreifenteile 11 miteinander verbunden.

Nach einer gewissen Kühlzeit und Bewegung in die Stellung VII (letztmalig in Richtung des Pfeiles 18 vertikal) wird nun die Achterreihe von Packungen 1 in Richtung des horizontalen Pfeiles 19 und bei der Ausführungsform der Figur 1 dann im rechten Winkel nach links hinten gemäß Pfeil 20 in die Position VIII gebracht. Dort kann die Packungsreihe ruhen, abkühlen und aushärten.

Gegebenenfalls kann nach weiterem Fördern in horizontaler Richtung gemäß Pfeil 20 in die Position 9 nochmals eine Ruhestellung zwischengeschaltet sein. Man kann aber die Packungsreihe auch gemäß dem vertikalen Pfeil 21 aus der Stellung IX vertikal nach oben in die Stellung X bewegen, um sie von acht Füllern, von denen schematisch nur zwei dargestellt und mit 22 bezeichnet sind, befüllt zu werden. Die jeweilige Packung wird also auf das Füllrohr zubewegt und mit steigendem Füllpegel wieder abgesenkt in einer Richtung entgegen der des vertikalen Pfeiles 21. Sodann erfolgt die Weiterführung der Packungsreihe in Richtung des Pfeiles 20 in die Position XI. Noch liegt eine Packung etwa im Zustand der Figur 3 vor, d.h. die Öffnung 13 ist noch unverschlossen.

Zum fließmitteldichten Verschweißen wird nun ein separat vorgefertigtes und auf einer Rolle 23 gelagertes Öffnungsstück in Form einer Kette herangeführt und bei 24 separiert. Das jeweilige separierte Öffnungsstück 14 wird nun in entsprechendem Abstand vom nächst vorderen oder danach folgenden über die Einheit der acht Packungen 1 in der Stellung XI positioniert, nicht dargestellte Einrichtungen erwärmen die nach unten gerichtete Oberfläche des Öffnungsstückes und gleichzeitig den bei der Ausführungsform der Packung nach Figur 3 gezeigten Rand der Öffnung 13, danach werden die erwärmten Teile dadurch zusammengebracht, daß das Öffnungsstück 14 nach unten in die Öffnung 13 hereingesetzt und angedrückt wird. Dadurch verschweißt sich das Öffnungsstück 14 am Rand der Öffnung 13 fließmitteldicht. Dieser Zustand der vollständig verschlossenen Packung ist anhand der vordersten beiden Packungen in der Stellung XI veranschaulicht.

Wird die immer noch zusammenhängende Achtereinheit der Packungen 1 weiter in Richtung des Pfeiles 20 in die Position XII gefördert, dann liegt die Packungsreihe jetzt neben einer schematisch angedeuteten Trennschweißeinrichtung 25, welche sieben in gleichem Abstand nebeneinander angeordnete und sich parallel erstreckende Trennschweißdrähte zeigt. Diese fahren in die Zwischenstreifenteile 11 und halbieren diese derart, daß jede der benachbarten Packungen einen flüssigkeitsdichten vertikal verlaufenden Längsstreifen 10 hat.
Die so separierten Packungen 1 werden weiter in Richtung des Pfeiles 20 in die Position XIII gefördert und dabei um 90° gedreht, weil die weitere Beförderung der Packung auch für das weitere Behandeln, insbesondere Umverpacken, in dieser Stellung besser zu beeinflussen ist und günstiger liegt. Das Abfördern erfolgt dann in Richtung des links vorn gezeigten Pfeiles 26.

Durch das beschriebene Herstellungsverfahren ist eine Flüssigkeitspackung 1 herstellbar, deren Tubus 3 vorzugsweise im Querschnitt viereckig (und insbesondere quadratisch) ist mit abgerundeten Ecken derart, daß in die geometrisch exakten Eckenkanten die Außenkanten des jeweiligen rahmenförmigen Streifens 10 zu liegen kommen. Die vertikalen Längsteile 8, 11 des jeweiligen Streifens 10 einer Packung 1 liegen also im Kantenbereich zweier vorzugsweise unter 90° zueinander angeordneter Wandungsebenen des Tubus 3, so daß die im Querschnitt viereckige Packung nicht parallel zu einer Seitenwand des Tubus 3 verlaufend halbiert wird sondern längs der Diagonale halbiert wird. In Draufsicht auf die im Querschnitt viereckige Packung gemäß der Ausführungsform der Figur 4 durchzieht daher der obere horizontale Streifenteil 9 des rahmenförmigen Streifens 10 die Oberwand 2 diagonal, d.h. von einer sogenannten hinteren Ecke 27 bis nach vorn zur Gießkante 28 des aufgeklappt gezeigten Öffnungsstückes 14. Man erkennt in Figur 4 auch den Rand der Ausgießöffnung 29.

Das Öffnungsstück 14 und der horizontale Teil 9 des Streifens 10 sind in der Oberwand 2 in den Vertiefungen 16 und 17 angeordnet, so daß die äußere Kontur, d.h. die Ebene der Oberwand 2 von keinem Teil überschritten wird.

Auch im Bereich des Bodens ist eine den rahmenförmigen Streifen 10 aufnehmende, rinnenartige Vertiefung eingeformt, wie dies im Bereich der Oberwand 2 beschrieben wurde, nur daß im Bodenbereich keine erweiterte Vertiefung 17 vorgesehen sein muß, weil dort keine Öffnung 13 und kein Öffnungsstück 14 unterzubringen sind.

Die Herstellung in Figur 1 ist ab der Position VIII nur einseitig mit einer Verschiebung in Richtung des horizontalen Pfeiles 20 gezeigt. Man kann Sich aber vorstellen, daß zur Vergrößerung der Leistung des Herstellungsverfahrens das Füllen, Verschließen, Vereinzeln und Abfördern auch in der anderen Richtung etwa spiegelsymmetrisch erfolgen kann, wenn man z.B. jede zweite Achtergruppe von Packungen 1 in Richtung eines horizontalen Pfeiles nach rechts vorn verschieben würde, welcher dem Pfeil 20 entgegengesetzt ist. Dann würde auch eine zweite Rolle 23 mit dem Streifen aus Öffnungsstücken 14 zusätzlich angeordnet werden.

## Patentansprüche

1. Verfahren zur Herstellung einer mit einem Fließmittel gefüllten Packung (1) mit Tubus (3), Boden und Oberwand (2) aus verformbarem Kunststoff, bei welchem die durch Verformung und Wärmeeinwirkung gebildete Packung (1) gefüllt₁ verschlossen und abgefördert wird, dadurch gekennzeichnet, daß zwei Zuschnitte (4) in Gestalt jeweils einer Platte im Abstand (a) voneinander erwärmt (in III - V), dann wenigstens längs eines rahmenförmigen Streifens (7-10) gehalten werden, der Mittelbereich (12) innerhalb des rahmenförmigen Streifens (10) tiefgezogen (in V) wird und danach zur Bildung des Packungsvolumens die zwei Zuschnitte (4) zusammengebracht und verschweißt werden, wobei eine Öffnung (13) in einer Oberwand (2) vorgesehen wird, die somit gebildete und mit Ausnahme des Öffnungsbereiches (3) fließmitteldichte Packung (1) gekühlt, weitergefördert (18-20), gefüllt (in XI) und mit einem die Öffnung (13) abdeckenden Öffnungsstück (14) verschlossen wird.

2. Verfahren nach Anspruch 1, dadurch gekennzeichnet, daß die zwei für die Bildung wenigstens einer Packung (1) vorgesehenen Zuschnitte (4) durch Wärmekontakt mit Heizbacken in mindestens zwei Stufen (III-V) erwärmt werden, jeder Zuschnitt (4) längs seiner Außenkante unter Bildung des rahmenförmigen Streifens (7-10) nur im Bereich dieses Streifens (7-10) durch Vakuum am Rahman eines Formbackens gehalten und weiter erwärmt wird und dann nach dem Tiefziehen des Mittelbereiches (12) der Packung (1) die Streifen (10) beider Zuschnitte (4) aufeinanderzubewegt und durch Kontaktschweißen (in V) miteinander verbunden werden.

3. Verfahren nach Anspruch 1 oder 2, dadurch gekennzeichnet, daß die Öffnung (13) in der Oberwand (2) der Packung (1) während des Tiefziehvorganges dadurch gebildet wird, daß anstelle des Streifens (10) eine die Hälfte der Öffnung (13) bildende Ausnehmung in dem jeweiligen Oberwandteil durch Tiefziehen geformt wird, wobei die zwei Ausnehmungen beim Zusammenschweißen der Streifen (10) die Öffnung (13) bilden.

4. Verfahren nach einem der Ansprüche 1 bis 3, dadurch gekennzeichnet, daß die Packungswandungen (1-3) zu einer solchen Gestaltung ausgeformt werden, daß der rahmenförmige Streifen (10) im wesentlichen in einer Ebene liegt und die Packung (1) mit Ausnahme der Öffnung (13) vollständig umzieht und wenigstens an Boden und Oberwand (2) nicht über die Außenkontur der Packung (1) hinausragt.

5. Verfahren nach einem der Ansprüche 1 bis 4, dadurch gekennzeichnet, daß beim Tiefziehen in wenigstens einer Packungswandung (2) eine den rahmenförmigen Streifen (10) aufnehmende rinnenartige Vertiefung (16) eingeformt wird.

6. Verfahren nach einem der Ansprüche 1 bis 5, dadurch gekennzeichnet, daß ein separat vorgefertigtes, öffnungsfähiges Öffnungsstück (14) aus verformbarem Kunststoff an die gefüllte Packung (1) herangeführt, bei gleichzeitigem Erwärmen des Randes der Öffnung (13) erwärmt und danach in die Öffnung (13) eingesetzt und anderen Rand fließmitteldicht verschweißt wird.

7. Verfahren nach einem der Ansprüche 1 bis 6, dadurch gekennzeichnet, daß zur gleichzeitigen Ausformung mehrerer Packungen (1) entsprechend viele rahmenförmige Streifen (7-11) im Randbereich und in Zwischenstreifenbereichen (11) des jeweiligen Zuschnittes (4) beim Tiefziehen gebildet werden, daß die zwischen den Streifen (7-11) tiefgezogenen Mittelbereiche (12) jeweils eine Reihe von hintereinander angeordneten Packungshälften bilden und alle Streifenbereiche (7-11) zweier Zuschnitte (4) eines Paares gleichzeitig miteinander verschweißt werden und nach dem Füllen der Packungsreihe und dem Verschließen mittels Aufsiegeln einer entsprechenden Reihe von Öffnungsstücken (14) die Packungsreihe vorzugsweise durch Trennschweißen (25) in Einzelpackungen (1) aufgeteilt wird.

8. Verfahren nach einem der Ansprüche 1 bis 7, dadurch gekennzeichnet, daß die Erwärmung der Zuschnitte (4) auf 160°C bis etwa 200°C, vorzugsweise 170°C bis 180°C, erfolgt und in jeder Stufe etwa drei Sekunden bis fünf Sekunden, vorzugsweise zwei bis drei Sekunden, dauert.

9. Verfahren nach einem der Ansprüche 1 bis 8, dadurch gekennzeichnet, daß die Paare von plattenförmigen Zuschnitten (4) durch Schwerkraft oder mittels Druckluft/Saugluft-Antriebe durch die einzelnen Verfahrensstufen (III-VII) gefördert werden.

10. Verwendung einer 0,2 bis 1,7 mm, vorzugsweise 0,4 bis 1,0 mm, dicken Kunststoffplatte als Zuschnitt (4) aus einem vorzugsweise gefüllten, tiefziehfähigen Thermoplast für die Herstellung einer Fließmittelpackung (1).

## Claims

1. A method of manufacturing a package (1) filled with a flowable medium and comprising a tube (3), bottom and top wall (2) of a shapeable synthetic plastics material in which the package (1) formed by shaping and the action of heat is filled, sealed and carried away, characterised in that two prepared blanks (4) in the form of in each case one sheet are heated at a distance (a) from each other (in III - V), and are then held at least along a frame-like strip (7, 10), the middle portion(12) within the frame-like strip (10) is deep drawn (at V) and then, in order to form the package space, the two prepared blanks (4) are brought together and welded, whereby an aperture (13) is provided in an upper wall (2), the resultant package (1) which is fluid-tight with the exception of the opening area (3) being cooled, carried away (18 to 20), filled (at XI) and sealed by an opening member (14) which masks the aperture (13).

2. A method according to claim 1, characterised in that the two prepared blanks (4) provided to form at least one package (1) are heated by being brought into contact with heat from heating jaws in at least two stages (III - V), each prepared blank (4) being held by a vacuum on the frame of a shaping jaw along its outer edge, to form the frame-like strip (7 to 10) and being further heated and then, after the middle portion (12) of the package (1) has been deep-drawn, the strips (10) of the two prepared blanks (4) are moved towards each other and connected to each other (at V) by contact welding.

3. A method according to claim 1 or 2, characterised in that the aperture (13) in the top wall (2) of the package (1) is formed during the deep-drawing process in that instead of the strip (10) a recess forming a half of the aperture (13) is formed in the relevant top wall part by deep-drawing, the two recesses forming the aperture (13) when the strips (10) are welded together.

4. A method according to one of claims 1 to 3, characterised in that the package walls (1 to 3) are shaped to such a form that the frame-like strip (10) lies substantially in one plane and completely encircles the package (1) with the exception of the aperture (13) while at least at the bottom and the top wall (2) it does not project beyond the outer contours of the package (1).

5. A method according to one of claims 1 to 4, characterised in that during deep-drawing a channel-like depression (16) which accommodates the frame-like strip (10) is formed into at least one wall (2) of the package.

6. A method according to one of claims 1 to 5, characterised in that a separately prefabricated openable opening member (14) of deformable synthetic plastics material is brought to the filled package (1), is heated during simultaneous heating of the edge of the aperture (13) and is then inserted into the aperture (13) and is welded to the edge thereof in fluid-tight manner.

7. A method according to one of claims 1 to 6, characterised in that for the simultaneous shaping of a plurality of packages (1), a corresponding number of frame-like strips (7 to 11) are during deep-drawing formed in the marginal zone and in the intermediate strip zones (11) of the relevant prepared blank (4) and in that the middle zones (12) which are deep-drawn between the strips (7 to 11) form in each case a series of serially disposed package halves, all the strip zones (7 to 11) of two prepared blanks (4) of one pair being simultaneously welded to each other and then, after the row of packages has been filled and closed by sealing on a corresponding row of opening members (14), the row of packages is preferably separated into individual packages (1) by a parting welding at (25).

8. A method according to one of claims 1 to 7, characterized in that heating of the prepared blanks (4) to 160°C to about 200°C and preferably 170°C to 180°C takes place, each stage lasting about three seconds to five seconds and preferably two to three seconds.

9. A method according to one of claims 1 to 8, characterised in that the pairs of sheet-like prepared blanks (4) are conveyed through the individual steps (III - VII) of the process by the force of gravity or by means of compressed air/suction air drives.

10. The use of a 0.2 to 1.7 mm and preferably 0.4 to 1 mm thick synthetic plastics sheet as a prepared blank (4) of a preferably filled and deep-drawable thermoplastics material for the manufacture of a package (1) to hold flowable media.

## Revendications

1. Procédé de fabrication d'un emballage (1) destiné à être rempli de matériaux fluides, avec une partie tube (3), un fond et une paroi supérieure (2), en matière synthétique déformable, dans lequel l'emballage (1), fabriqué par déformation et effet thermique, est rempli, obturé et évacué, caractérisé en ce que deux flans (4), se présentant chacun sous la forme d'une plaque, sont chauffés à une distance (a) l'un par rapport à l'autre (en III à V), puis sont maintenus au moins le long d'une bande (7 à 10) en forme de cadre, la zone médiane (12) située dans les limites de la bande (10) en forme de cadre étant soumise à un étirage profond (en V), puis les deux flancs (4) étant assemblés et soudés, pour constituer le volume d'emballage, une ouverture (13) étant prévue dans une paroi supérieure (2), l'emballage (1), étanche à un matériau fluide, ainsi constitué étant refroidi, à l'exception de la zone d'ouverture (3), évacuée dans un transport (18 à 20), remplie (en XI) et obturée à l'aide d'une pièce d'ouverture (14) recouvrant l'ouverture (13).

2. Procédé selon la revendication 1, caractérisé en ce que les deux flans (4) prévus pour constituer au moins un emballage (1) sont chauffés par contact thermique avec des mâchoires chauffantes, en au moins deux étages (III-V), chaque flan (4) étant maintenu sur le cadre d'une mâchoire de formage, le long de son arête extérieure, en formant la bande (7 à 10) en forme de cadre seulement dans la zone de cette bande (7 à 10), par le vide, puis soumis à un chauffage supplémentaire et ensuite, après emboutissage profond de la zone médiane (12) de l'emballage (1), les bandes (10) des deux flans (4) étant ramenées l'une sur l'autre et reliées ensemble par soudage par contact en (V).

3. Procédé selon la revendication 1 ou 2, caractérisé en ce que l'ouverture (13) ménagée dans la paroi supérieure (2) de l'emballage (1) est formée pendant le processus d'emboutissage profond par le fait qu'au lieu de la bande (10) est formé un évidement constituant la moitié de l'ouverture (13), dans la partie de paroi supérieure spécifique, par emboutissage profond, les deux évidements constituant l'ouverture (13) lors du soudage d'assemblage des bandes (10).

4. Procédé selon l'une des revendications 1 à 3, caractérisé en ce que les parois d'emballages (1 à 3) sont déformées pour prendre une forme faisant que la bande (10) en forme de cadre est située sensiblement dans un plan et entoure complètement l'emballage (10), à l'exception de l'ouverture (13), et ne dépasse pas du contour extérieur de l'emballage (1), au moins à l'emplacement du fond et de la paroi supérieure (2).

5. Procédé selon l'une des revendications 1 à 4, caractérisé en ce que, lors de l'emboutissage profond, une cavité (16) en forme de goulotte, recevant la bande (10) en forme de cadre, est formée dans au moins une paroi d'emballage (2).

6. Procédé selon l'une des revendications 1 à 5, caractérisé en ce qu'une pièce d'ouverture (14), susceptible d'être ouverte, fabriquée séparément, en matière synthétique déformable, est amenée sur l'emballage (1) rempli, chauffé, avec chauffage simultané du bord de l'ouverture (13), puis inseré dans l'ouverture (13) et l'autre bord étant soudé, de façon étanche au produit fluide.

7. Procédé selon l'une des revendications 1 à 6, caractérisé en ce que, pour façonner simultanément plusieurs emballages (1), on forme, lors de l'emboutissage profond, dans la zone de bordures et dans les zones de bandes intermédiaires (11) du flan respectif (4), un nombre de bandes (7 à 11) en forme de cadre correspondant, en ce que les zones médianes (12), obtenues par emboutissage profond entre les bandes (7 à 11), forment chaque fois une rangée de demi-emballages disposés les uns derrière les autres, et toutes les zones de bandes (7 à 11) de deux flans (4) d'une paire étant soudées ensemble simultanément et, après remplissage de la rangée d'emballage et la fermeture par scellage d'une rangée correspondante de pièces d'ouvertures (14), la rangée d'emballage est subdivisée en emballages individuels (1), de préférence par un soudage de séparation (25).

8. Procédé selon l'une des revendications 1 à 7, caractérisé en ce que le chauffage des flans (4) s'effectue à une température allant de 160°C à à peu près 200°C, de préférence de 170°C à 180°C, et dure, à chaque étage, à peu près trois secondes à cinq secondes, de préférence deux à trois secondes.

9. Procédé selon l'une des revendications 1 à 8, caractérisé en ce que les paires de flans (4) formant plaques sont transportées dans les différents étages (III à VII) du procédé, sous l'effet de la gravité ou au moyen d'entraînement à air comprimé/à air aspiré.

10. Utilisation d'une plaque en matière synthétique, faisant office de flan (4), d'une épaisseur de 0,2 à 1,7 mm, de préférence de 0,4 à 1,0 mm, en matériau thermoplastique, susceptible de subir un emboutissage profond, de préférence contenant une charge, pour la fabrication d'un emballage à matériau fluide (1).
